# EUROPEAN PATENT APPLICATION

(11) **EP 2 578 472 A1**
(43) Date of publication of application: **10.04.2013**
(21) Application number: 11786766.3
(22) Date of filing: 27.05.2011
(51) Int. Cl.: B62D 12/00, B62D 5/28, B62D 11/04

(54) **WHEEL LOADER**

(30) Priority: 27.05.2010 JP 2010121390
(71) Applicant: Hitachi Construction Machinery Co., Ltd., Bunkyou-ku Tokyo 112-0004 (JP)
(72) Inventor: ITOU, Noritaka, Tsuchiura-shi Ibaraki 300-0013 (JP); KIKUCHI, Tooru, Tsuchiura-shi Ibaraki 300-0013 (JP)
(74) Representative: Jansen, Cornelis Marinus
(86) International application number: PCT/JP2011/062256
(87) International publication number: WO 2011/149069

(57) **Abstract**

A wheel loader includes; a vehicle body in which a front frame and a rear frame are connected together at a connection section in a steerable manner; at least a pair of front wheels fitted to wheel axle of the front frame and at least a pair of rear wheels fitted to wheel axle of the rear frame, with the connection section between the pair of front wheels and the pair of rear wheels; a pair of front wheel electric motors that drive the pair of front wheels and a pair of rear wheel electric motors that drive the pair of rear wheels; a direction alteration control unit that flexes the vehicle body so that the front frame and the rear frame rotate in mutually opposite directions about the connection section as a center while steering actuation is being performed, by driving the pair of front wheel electric motors and the pair of rear wheel electric motors so that a magnitude relationship between speeds of the front wheel electric motor on the inner wheel side and of the rear wheel electric motor on the inner wheel side and a magnitude relationship between speeds of the front wheel electric motor on the outer wheel side and of the rear wheel electric motor on the outer wheel side are opposite, and moreover a speed difference corresponds to a steering angle; and a turning control unit that, when the steering actuation is determined to have been terminated, drives the pair of front wheel electric motors and the pair of rear wheel electric motors so that an inner-outer wheels speed difference corresponding to the steering angle is applied to the speed difference of the front wheel electric motor on the outer wheel side and the front wheel electric motor on the inner wheel side, and so that the inner-outer wheels speed difference corresponding to the steering angle is applied to the speed difference of the rear wheel electric motor on the outer wheel side and the rear wheel electric motor on the inner wheel side.

## Description

### TECHNICAL FIELD

The present invention relates to a wheel loader.

### BACKGROUND ART

A wheel loader of the articulated type, in which a front frame and a rear frame flex around a linking shaft that serves as an axis, comprises a pair of left and right front wheels in front of the linking shaft and a pair of left and right rear wheels behind the linking shaft. The left and right front wheels and the left and right rear wheels are linked together by vehicle wheel shafts via respective differential devices. The rotation of a drive shaft of an engine is transmitted to a propeller shaft via a torque converter and a transmission, and the rotation of this propeller shaft is transmitted via the differential devices to the front wheels and to the rear wheels, thus propelling the vehicle.

Furthermore, a wheel loader is also per se known in which an electric motor is fitted to each of the vehicle wheel shafts, so that each of the pair of front wheels and each of the pair of rear wheels is driven by its own individual electric motor.
With the wheel loader described above, a generator is coupled to the engine, and this generator is driven by the rotation of the drive shaft of the engine. And the electrical power from the generator is supplied to each of the electric motors, thus driving the front wheels and the rear wheels. Moreover, with this wheel loader, during turning, the front frame and the rear frame are angled with respect to one another so that the vehicle body changes its orientation, and this changed orientation of the vehicle body is produced by a hydraulic cylinder for steering that extends and retracts as the steering is operated (for example, refer to Patent Document #1).

### CITATION LIST

### PATENT LITERATURE

Patent Document #1: Japanese Laid-Open Patent Publication 2000-177411.

### SUMMARY OF THE INVENTION

### TECHNICAL PROBLEM

With the wheel loader described in the abovementioned prior art document, the change of orientation of the vehicle body is performed by the hydraulic cylinder for steering (refer to Paragraph 24 of Patent Document #1). With this method, a large drive force is required for the hydraulic cylinder for steering for making a change of the orientation of the vehicle body, so that the hydraulic system becomes large. Due to this, along with increase of the size of the wheel loader, the amount of energy consumed also becomes great, and this entails a negative influence upon the environment.

### MEANS FOR SOLUTION

According to the 1st aspect of the present invention, a wheel loader comprises: a vehicle body in which a front frame and a rear frame are connected together at a connection section in a steerable manner; at least a pair of front wheels fitted to wheel axle of the front frame and at least a pair of rear wheels fitted to wheel axle of the rear frame, with the connection section between the pair of front wheels and the pair of rear wheels; a pair of front wheel electric motors that drive the pair of front wheels and a pair of rear wheel electric motors that drive the pair of rear wheels; a direction alteration control unit that flexes the vehicle body so that the front frame and the rear frame rotate in mutually opposite directions about the connection section as a center while steering actuation is being performed, by driving the pair of front wheel electric motors and the pair of rear wheel electric motors so that a magnitude relationship between speeds of the front wheel electric motor on an inner wheel side and of the rear wheel electric motor on the inner wheel side and a magnitude relationship between speeds of the front wheel electric motor on an outer wheel side and of the rear wheel electric motor on the outer wheel side are opposite, and moreover a speed difference corresponds to a steering angle; and a turning control unit that, when the steering actuation is determined to have been terminated, drives the pair of front wheel electric motors and the pair of rear wheel electric motors so that an inner-outer wheels speed difference corresponding to the steering angle is applied to the speed difference of the front wheel electric motor on the outer wheel side and the front wheel electric motor on the inner wheel side, and so that the inner-outer wheels speed difference corresponding to the steering angle is applied to the speed difference of the rear wheel electric motor on the outer wheel side and the rear wheel electric motor on the inner wheel side.
According to the 2nd aspect of the present invention, a wheel loader according to the 1st aspect may further comprise: pair of steering hydraulic cylinders each of which links together the front frame and the rear frame, with the vehicle body being flexed by extension and retraction operation of the pair of steering hydraulic cylinders in accordance with the steering actuation.
According to the 3rd aspect of the present invention, it is preferred that in a wheel loader according to the 2nd aspect, the pair of steering hydraulic cylinders operate to extend and retract so as to follow an orientation changing operation in which the vehicle body is flexed in accordance with the speed difference of the electric motors that are driven by the direction alteration unit.
According to the 4th aspect of the present invention, a wheel loader according to the 3rd aspect may further comprise: anti-void valves connected to the bottom chambers and to the rod chambers of the pair of steering hydraulic cylinders.
According to the 5th aspect of the present invention, it is preferred that in a wheel loader according to any one of the 1st through 4th aspects, the connection section is positioned at an intermediate position at which distances from the connection section to front wheel axle to which the pair of front wheels are attached and from the connection section to rear wheel axle to which the pair of rear wheels are attached are equal.
According to the 6th aspect of the present invention, it is preferred that in a wheel loader according to the 5th aspect, the direction alteration control unit drives the front wheel electric motor that drives the front wheel on the inner wheel side and the rear wheel electric motor that drives the rear wheel on the outer wheel side at a same rotational speed, and drives the front wheel electric motor that drives the front wheel on the outer wheel side and the rear wheel electric motor that drives the rear wheel on the inner wheel side at a same rotational speed.
According to the 7th aspect of the present invention, it is preferred that in a wheel loader according to the 5th or 6th aspect, the turning control unit drives the front wheel electric motor that drives the front wheel on the inner wheel side and the rear wheel electric motor that drives the rear wheel on the inner wheel side at a same rotational speed, and drives the front wheel electric motor that drives the front wheel on the outer wheel side and the rear wheel electric motor that drives the rear wheel on the outer wheel side at a same rotational speed.

### ADVANTAGEOUS EFFECT OF THE INVENTION

According to this invention, since the direction of the vehicle body is changed by operating the vehicle so that the magnitude relationship of the speeds of those of the pair of front wheels and the pair of rear wheels on the inner wheel side, and the magnitude relationship of those on the outer wheel side, are opposite, accordingly no large hydraulic system is required, so that it is possible to make the wheel loader more compact, and to reduce the amount of energy that is consumed.

### BRIEF DESCRIPTION OF THE DRAWINGS

Fig. 1 is an external perspective view of a hybrid wheel loader that is an embodiment of the wheel loader according to this invention;
Fig. 2 is a plan view of the hybrid wheel loader shown in Fig. 1;
Fig. 3 is a plan view showing a state in which the hybrid wheel loader shown in Fig. 2 is flexed;
Fig. 4 is a side view of the hybrid wheel loader shown in Fig. 1;
Fig. 5 is a system block diagram of the wheel loader according to this invention;
Fig. 6 is a schematic figure showing the relationship between electric motors and steering hydraulic cylinders of the wheel loader according to this invention;
Fig. 7 is a schematic figure for explanation of orientation changing operation of the wheel loader shown in Fig. 6;
Fig. 8 is a schematic figure for explanation of turning operation of the wheel loader shown in Fig. 6; and
Fig. 9 is a flow chart showing processing for turning operation of the wheel loader according to this invention.

### DESCRIPTION OF THE EMBODIMENTS

In the following, a wheel loader according to the present invention that is one embodiment of a hybrid wheel loader will be explained in detail with reference to the drawings.

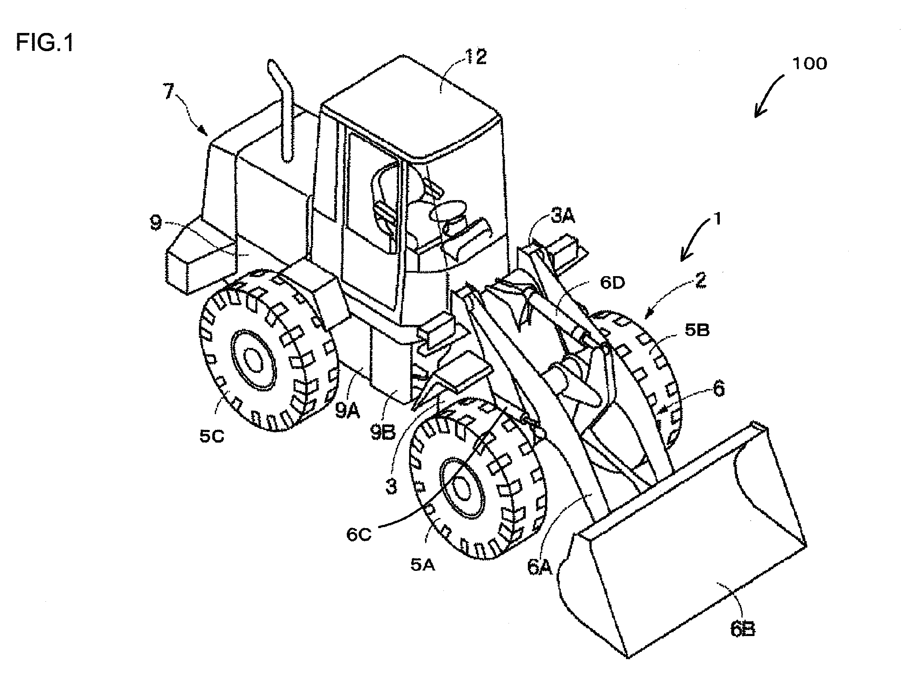

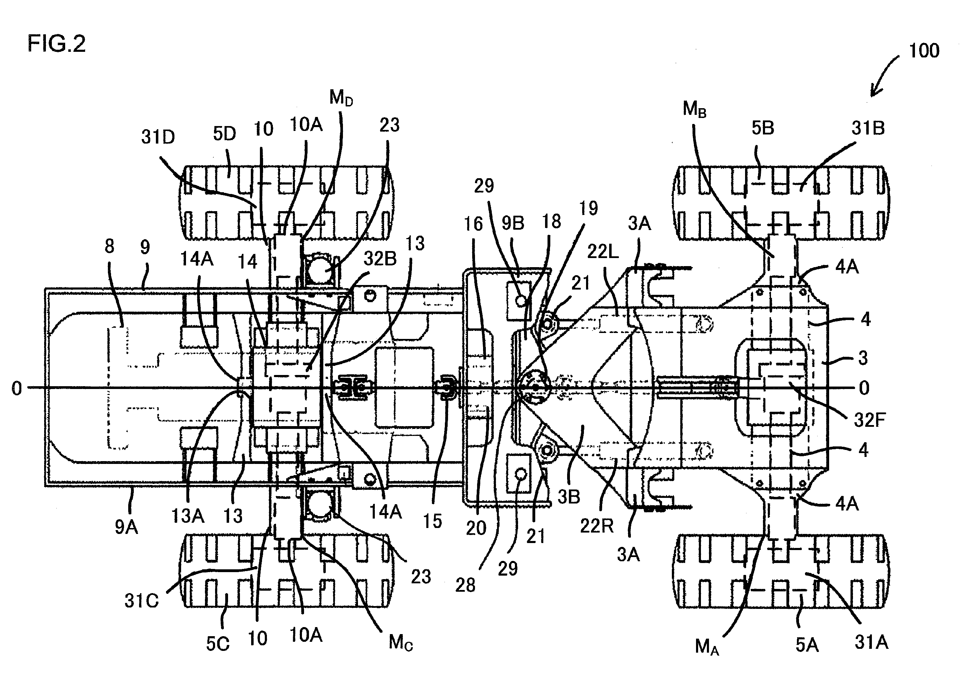

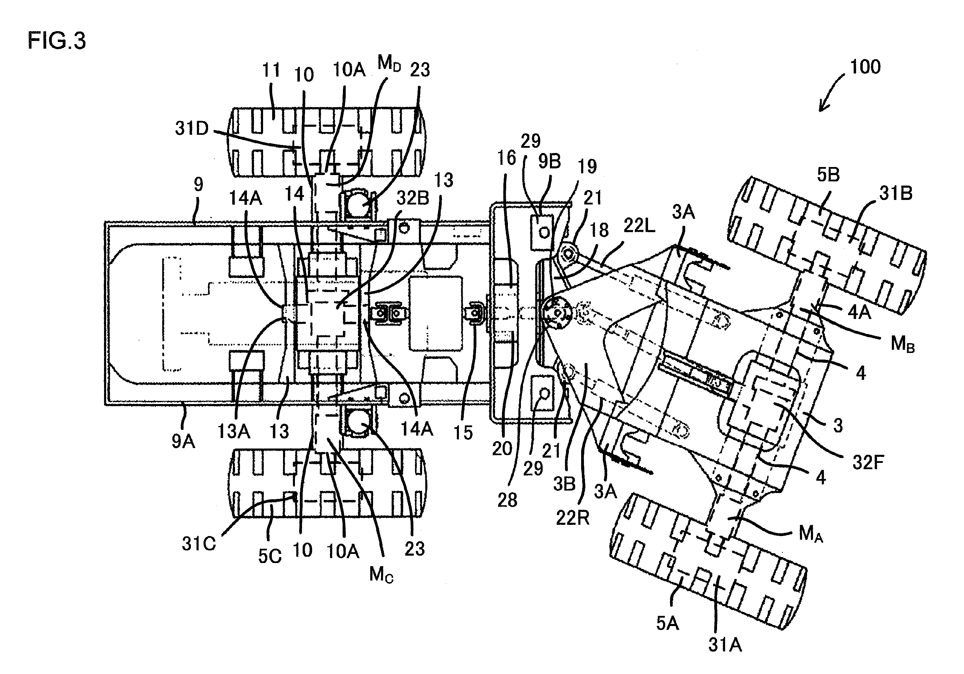

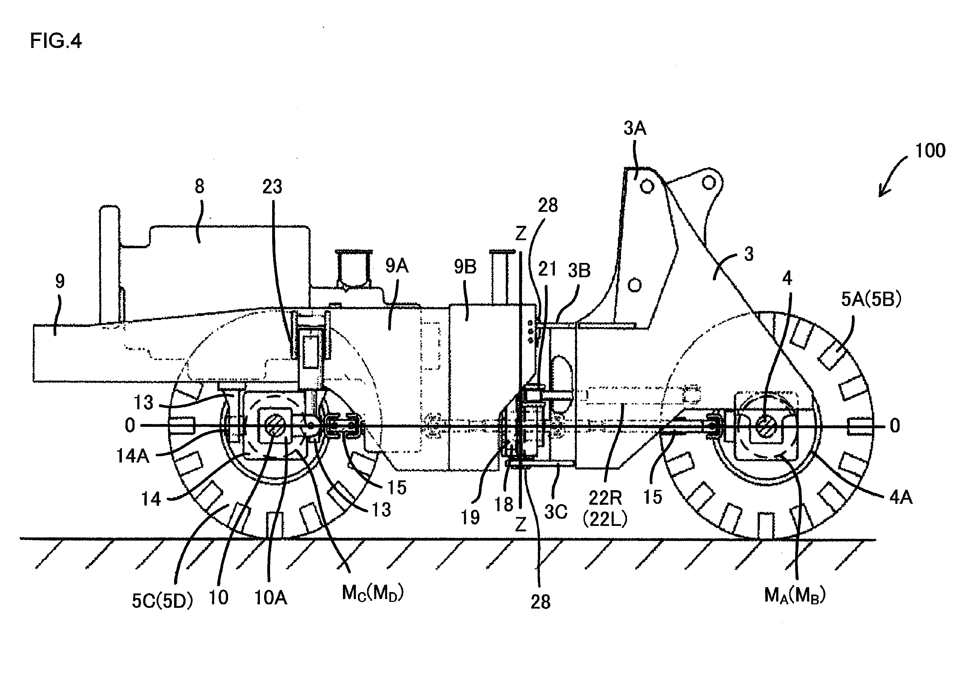

Fig. 1 is an external perspective view of this hybrid wheel loader; Fig. 2 is a plan view of the hybrid wheel loader shown in Fig. 1; Fig. 3 is a plan view showing a state in which the wheel loader shown in Fig. 2 is flexed; and Fig. 4 is a side view of the hybrid wheel loader shown in Fig. 1. However, a working device (i.e. a bucket) that is shown in Fig. 1 is omitted from Figs. 2 through 4.

As explained below, the hybrid wheel loader 100 shown in Figs. 1 through 4 is a working vehicle having a vehicle body 1 of an articulated type, in which a front vehicle body portion 2 and a rear vehicle body portion 7 are linked together by a connecting frame 18 so that they can flex.
The front vehicle body portion 2 is disposed at the front of the hybrid wheel loader 100, and includes a front frame 3 that is shaped approximately as a box, front wheel axle 4 that is provided below this front frame 3, front wheels 5A and 5B that are provided at the left and right ends of this front wheel axle 4, and a working device 6 that is attached at the front of the front frame 3 so as to be capable of being elevated.

Here, the front wheel axle 4 is held and rotatably supported within left and right wheel axle tubes 4A. The wheel axle tubes 4A are fixed to the lower surface of the front frame 3. Due to this, the front wheel axle 4 is fixed to the front frame 3 in a state in which they are not capable of performing rolling motion around the roll axis O as a center. Moreover, no suspension device or the like of any type for shock absorption is provided between the front wheel axle 4 and the front frame 3, and thus it is arranged for a large load imposed upon the working device 6 to be supported by the front frame 3, the front wheel axle 4, the front wheels 5A and 5B, and so on.

The working device 6 includes arms 6A that are attached to bracket portions 3A provided at the top of the front frame 3 on its left and right sides so as to be capable of performing elevation motion, and a bucket 6B that is rotatably attached at the end portions of these arms 6A. The arms 6A are rotationally driven by arm cylinders 6C, and the bucket 6B is rotationally driven by a bucket cylinder 6D. In this working device 6, the bucket 6B is operated to be raised and lowered in the upwards and downwards directions by the rotational operation of the arm cylinders 6C and the bucket cylinder 6D, and thereby the task of picking up earth or sand or the like and loading it into a dump truck may be performed by the bucket 6B.

The rear vehicle body portion 7 is linked behind the front vehicle body portion 2, in a state in which it is capable of flexing in the left and right directions. This rear vehicle body portion 7 includes a rear frame 9 that contains a drive power source 8, rear wheel axle 10 that is provided below this rear frame 9, rear wheels 5C and 5D that are provided at the left and right ends of the rear wheel axle 10, and a driver compartment 12 that is provided above the rear frame 9.
The rear frame 9 includes a frame holding section 9A in which is held a drive power source 8 that includes an engine, a motor-generator, a hydraulic pressure pump and so on, and a connection section 9B that is provided at the front of this frame holding section 9A. The motor-generator and the hydraulic pressure pump will be described hereinafter.

A pair of support brackets 13 that extend along the transverse direction of the vehicle body 1 is provided below the holding frame section 9A. This pair of support brackets 13 is disposed at the intermediate portion of the rear frame 9 along its longitudinal direction. The central axis of the vehicle body 1 in its transverse direction constitutes a roll axis O that passes through the front frame 3 and the rear frame 9 along their entire lengths. Through holes (not shown in the figures) are provided so as to pass through the support brackets 13 along the roll axis O. A support portion 14 for the rear wheel axle 10 is disposed between the pair of support brackets 13 described above.

Along with the wheel axle tubes 10A that hold the rear wheel axle 10 being attached to the left and right sides of the support portion 14, support shafts 14A are provided to project therefrom, and extend forwards and rearwards along the roll axis O. These support shafts 14A of the support portion 14 are inserted into the through holes (not shown in the drawings) of the support brackets 13. Due to this, the rear wheel axle 10 is supported so as to be rotatable around the roll axis O with respect to the rear frame 9. Moreover, along with the front wheel axle 4 being connected to the drive power source 8 via a propeller shaft 15, the rear wheel axle 10 is connected to the drive power source 8 via the propeller shaft 15.

On the other hand, along with a cylindrical coupling barrel portion 16 that extends along the roll axis O being provided to the connection section 9B, a coupling shaft 20 and a bearing (not shown in the drawings) that supports this coupling shaft 20 are also provided within this coupling barrel portion 16. Moreover, the driver compartment 12 within which the operator rides is disposed above the connection section 9B.

A linking shaft (a pin) 19 is provided to the connecting frame 18 that is provided between the front frame 3 and the rear frame 9, and extends upwards and downwards in the vertical direction (the flexing axis Z direction in Fig. 4), above and below a central position thereof in the transverse direction; and moreover a cylindrical coupling shaft 20 is provided that extends along the roll axis O towards the rear frame 9.

The connecting frame 18 in the state of being sandwiched between the upper plate 3B and the lower plate 3C of the front frame 3 (refer to Fig. 4) is linked to the front frame 3 via the linking shaft 19; and moreover the connecting frame 18 is linked to the rear frame 9 by the coupling shaft 20 being inserted into the coupling barrel portion 16 of the connection section 9B.
Due to this, the connecting frame 18 links together the front frame 3 and the rear frame 9 about the flexing axis Z as a center, so that they are capable of flexing in the left and right directions, as shown in Fig. 3. Moreover, the coupling shaft 20 of the connecting frame 18 is supported by a bearing (not shown in the figures) so as to be rotatable around the roll axis O as center. Due to this, the connecting frame 18 links together the front frame 3 and the rear frame 9 so that they are capable of relative rolling motion.

The connecting frame 18 and the front frame 3 are linked by a pair of hydraulic cylinders for steering 22L and 22R that are symmetrically placed on opposite sides of the roll axis O. A pair of connection brackets 21 is provided at the front of the connecting frame 18, and the one ends of the hydraulic cylinders for steering 22L and 22R are fitted to these connection brackets 21. Moreover, the other ends of the hydraulic cylinders for steering 22L and 22R are attached to the lower plate 3C of the front frame 3 (refer to Fig. 4).It is arranged for those hydraulic cylinders to be extended or retracted by pressurized hydraulic fluid being either supplied to the hydraulic cylinders for steering 22L and 22R from a hydraulic pressure pump (not shown in the drawings) of the drive power source 8 or exhausted therefrom, and thereby the front frame 3 may be flexed to the left or the right direction with respect to the rear frame 9.

Furthermore, in this hybrid wheel loader 100, hydraulic cylinders 23 for limitation of rolling oscillation are actuators that are provided between the rear frame 9 and the rear wheel axle 10 for limiting rolling oscillation. These hydraulic cylinders 23 for limitation of rolling oscillation are disposed at positions in the neighborhood of the left and right rear wheels 5C and 5D respectively in the state of being extended in the vertical direction. The bottom ends of the tubes of these hydraulic cylinders 23 for limitation of rolling oscillation are attached to the rear frame 9, while the ends of their rods are attached to the wheel axle tubes 10A that hold the rear wheel axle 10. And these hydraulic cylinders 23 for limitation of rolling oscillation are connected to a hydraulic pressure pump (not shown in the drawings) within the drive power source 8. Thrust is applied around the roll axis O between the rear frame 9 and the rear wheel axle 10 by the left and right hydraulic cylinders 23 for limitation of rolling oscillation, according to the difference of the pressures between at their bottom ends and their rod ends. Due to this, it is arranged for the hydraulic cylinders 23 to limit rolling oscillation of the rear frame 9 (i.e. oscillation thereof around the roll axis O).

With the hybrid wheel loader according to this embodiment, due to the connection section 9B and the connecting frame 18, the front frame 3 and the rear frame 9 are linked together so that they are capable of performing relative rolling motion around the roll axis O. Due to this, even when the front frame 3 oscillates to and fro around the roll axis O due to an excavation task or the like that is being performed by the working device 6, it is possible to allow the rear frame 9 to execute rolling motion with respect to the front frame 3 by using the connecting frame 18 and so on. And, because of this, it becomes possible to prevent the transmission of vibration from the front frame 3 to the rear frame 9. Moreover, the thrust around the roll axis O is applied between the rear frame 9 and the rear wheel axle 10 by using the hydraulic cylinders 23 for limitation of rolling oscillation that are provided between the rear frame 9 and the rear wheel axle 10, so that rolling oscillation of the rear frame 9 is limited. As a result, it is possible to enhance the riding feeling within the driver compartment 12 that is provided on the rear frame 9.

An electric motor M_{A} (a front wheel electric motor) and an electric motor M_{B} (also a front wheel electric motor) are installed between the end portions of the front wheel axle 4 and the front wheels 5A and 5B respectively. And an electric motor M_{C} (a rear wheel electric motor) and an electric motor M_{D} (also a rear wheel electric motor) are installed between the end portions of the rear wheel axle 10 and the rear wheels 5C and 5D respectively. Moreover, speed reduction devices 31_{A} through 31_{D} that are equipped with brakes are interposed between these electric motors M_{A} through M_{D} and the front wheels 5A and 5B and the rear wheels 5C and 5D, respectively. A differential device 32F is interposed between the propeller shaft 15 and the front wheel axle 4, and a differential device 32B is interposed between the propeller shaft 15 and the rear wheel axle 10.

With this hybrid wheel loader 100, the motor-generator performs generation of power along with the rotation of the drive shaft of the engine that is housed within the drive power source 8, and this electrical power that is generated is supplied to the electric motors M_{A} through M_{D}, either directly or along with electrical power that has been charged into an electricity storage device. And drive force for propulsion is applied by the electric motors M_{A} and M_{D} to the front wheels 5A and 5B and to the rear wheels 5C and 5D. Furthermore, by each of the front wheels 5A and 5B and each of the rear wheels 5C and 5D being rotated at a predetermined rotational speed, the front vehicle body portion 2 and the rear vehicle body portion 7 are rotated so that their linkage angle changes around the linking shaft 19 as a central axis, and due to this the vehicle body 1 is flexed, in other words its direction is altered. While the details of this operation will be described hereinafter, with the wheel loader according to the present invention, when the front vehicle body portion 2 and the rear vehicle body portion 7 are flexed in this way, the hydraulic cylinders for steering 22L and 22R extend and retract so as to follow the flexing that occurs due to the above described operation of the front vehicle body portion 2 and the rear vehicle body portion 7. In this case, the extension and retraction of the hydraulic cylinders 22 for steering does not take precedence over the operation of the vehicle body that is flexed due to the difference in the rotational speeds of the front wheels 5A and 5B and of the rear wheels 5C and 5D that are driven by the electric motors M_{A} through M_{D}.

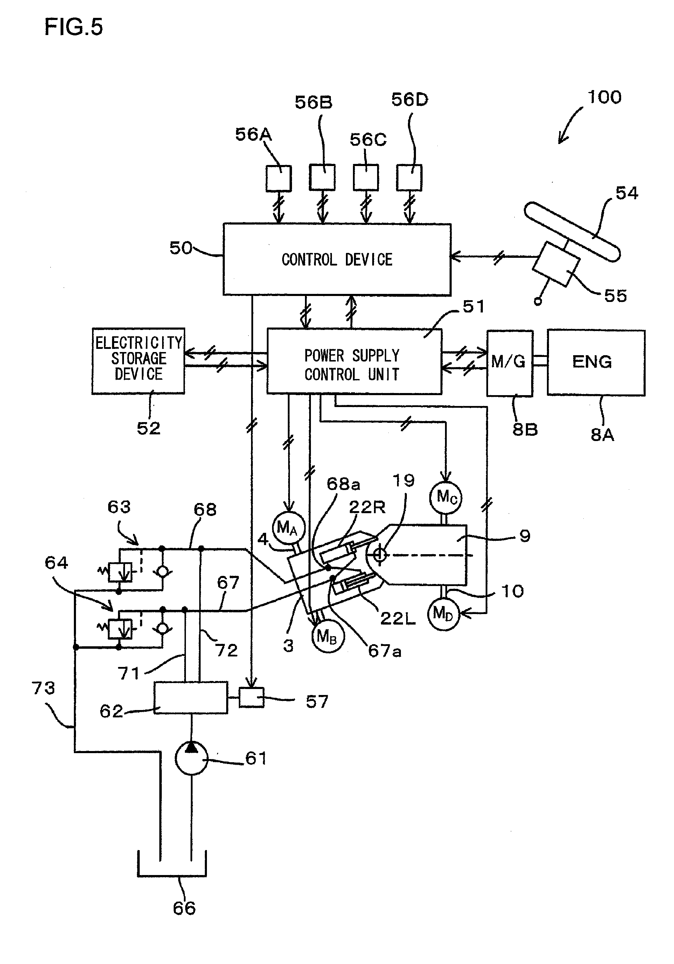

Fig. 5 is a system block diagram of the wheel loader according to this invention.
First, the electric circuits will be explained. As described above, the front frame 3 and the rear frame 9 are rotatably linked together with the linking shaft 19 serving as the center. The pair of electric motors M_{A} and M_{B} are attached to the front frame 3 via the front wheel axle 4. And the pair of electric motors M_{C} and M_{D} are attached to the rear frame 9 via the rear wheel axle 10.
Each of the electric motors M_{A} through M_{D} is rotationally driven according to a control signal from a power supply control unit 51.

As described above, an engine 8A and a motor-generator 8B are contained within the drive power source 8. Moreover, a steering hydraulic pressure pump (not shown in the figure) that supplies and exhausts pressurized hydraulic fluid to and from the hydraulic cylinders for steering 22L and 22R that will be described hereinafter is contained within the drive power source 8, although this feature is not shown in the drawings. The motor-generator 8B generates electricity due to the rotation of the drive shaft of the engine 8A.

The hybrid wheel loader 100 comprises an electricity storage device 52. When engine braking is to be applied and the vehicle speed is to be decelerated, the power supply control unit 51 performs control so that electrical energy accumulated in the electric motors M_{A} through M_{D} is regenerated and is charged into the electricity storage device 52. Furthermore, it performs control so that the electrical energy generated by the motor-generator 8B is charged into the electricity storage device 52. The power supply control unit 51 includes an inverter, and, if the electrical current that is outputted from the electric motors M_{A} through M_{D} or from the motor-generator 8B is AC current, then it is converted into DC and is charged into the electricity storage device 52. Moreover, the DC electrical current that is taken out from the electricity storage device 52 is converted into AC electrical current, and drives the motor-generator 8B as an electric motor. By operating the motor-generator 8B as an electric motor, it is possible to assist the engine 8A when it is driving the hydraulic pressure pump that supplies and exhausts pressurized hydraulic fluid to and from the arm cylinders 6C, the bucket cylinder 6D, or the hydraulic cylinders 23 for limitation of rolling oscillation.

When the engine 8A is driven, the motor-generator 8B operates as a generator, and the electrical power generated by this motor-generator 8B is supplied to the electric motors M_{A} through M_{D}, each of which is controlled to rotate by a control signal from the power supply control unit 51. Due to each of the electric motors M_{A} through M_{D} being thus controlled to rotate, each of the front wheels 5A and 5B and the rear wheels 5C and 5D is rotated at an appropriately corresponding rotational speed, so that the hybrid wheel loader 100 performs forward progression under four wheel drive and also turning. Actuation levers are provided within the driver compartment 12 for a steering wheel, an accelerator pedal, a brake pedal and so on, and, by these actuation levers being actuated, the current to each of the electric motors M_{A} through M_{D} is controlled, so that changeover between forward motion and reverse motion and direction alteration of the vehicle body and so on are adjusted. Moreover, upon actuation of the brake pedal, the vehicle body 1 is stopped by operation of the brakes of the brake-equipped speed reduction devices 31A through 31D.

The control device 50 includes a CPU, ROM, RAM, and a calculation processing device. Information sent from a steering angle detector 55 and specifying the steering angle of the steering wheel 54 is inputted to the control device 50. And, on the basis of this steering angle information outputted from the steering angle detector 55, the control device 50 calculates rotational speeds N_{A} through N_{D} for rotation of the electric motors M_{A} through M_{D}, and rotates the electric motors M_{A} through M_{D} on the basis of the results of these calculations. Furthermore, on the basis of this steering angle information outputted from the steering angle detector 55, the control device 50 calculates amounts for extension and retraction of the steering hydraulic cylinders 22L and 22R. And, on the basis of the results of this calculation, the control device 50 controls changeover of the position of the direction control valve 62 via a motor control valve drive actuator 57, thus controlling the flow rates of the pressurized hydraulic fluid flowed out from the direction control valve 62.

On the basis of the steering angle information sent from the steering angle detector 55, ratios of rotational speed for the front wheels 5A and 5B and for the rear wheels 5C and 5D are calculated by the control device 50. The control device 50 multiplies the calculated ratios of rotational speed by the rotational speed (that corresponds to the vehicle speed) at this time, and thereby calculates target rotational speeds N_{A} through N_{D} corresponding to the front wheels 5A and 5B and the rear wheels 5C and 5D respectively. And the control device 50 outputs control signals corresponding to these target rotational speeds N_{A} through N_{D} to the inverters of the electric motors M_{A} through M_{D}, and thus rotates the electric motors M_{A} through M_{D} at the respective rotational speeds N_{A} through N_{D}. Due to this, the front frame 3 and the rear frame 9 are flexed at a flexion angle that corresponds to the amount of steering actuation.

Then, the rotational differences between the inner and outer wheels corresponding to the steering angle of the steering wheel 54, in other words the ratios between the rotational speeds of the front wheels 5A and 5B or of the rear wheels 5C and 5D, are calculated by the control device 50. And the control device 50 multiplies the calculated ratios of rotational speed by the rotational speed (that correspond to the vehicle speed) at this time, and calculates rotational speeds N_{A} through N_{D} corresponding to the front wheels 5A and 5B and the rear wheels 5C and 5D respectively. The control device 50 then outputs information specifying these rotational speeds N_{A} through N_{D} to drivers (not shown in the drawings) of the electric motors M_{A} through M_{D}. It should be understood that, in the subsequent explanation, it is supposed that the rotational speeds of the front wheels (i.e., drive wheels) 5A and 5B and of the rear wheels (i.e., drive wheels) 5C and 5D and the rotational speeds of the electric motors M_{A} through M_{D} that respectively correspond to these drive wheels are the same. Due to this, the electric motors M_{A} through M_{D} are rotated by their drivers at the rotational speeds N_{A} through N_{D} respectively, so that the front wheels 5A and 5B and the rear wheels 5C and 5D perform turning at an inner-outer wheel rotational speed difference that corresponds to the steering angle.

The hybrid wheel loader 100 also comprises rotational speed detectors 56A through 56D that detect the rotational speeds N_{A} and N_{B} of the front wheels 5A and 5B and the rotational speeds N_{C} and N_{D} of the rear wheels 5C and 5D. And the output signals from the rotational speed detectors 56A through 56D are inputted to the control device 50, and it is decided by the control device 50 whether or not they have arrived at the rotational speeds that have been calculated in advance corresponding to steering actuation.

Next, the hydraulic pressure circuits will be explained. It should be understood that, in Fig. 5, the arm cylinders 6C, the bucket cylinder 6D, the hydraulic cylinders 23 for limitation of rolling oscillation, and the hydraulic pressure pumps that discharge pressurized hydraulic fluid to these cylinders and so on are omitted.
Pressurized hydraulic fluid is supplied from a steering hydraulic fluid pressure pump 61 to the hydraulic cylinders for steering 22L and 22R via a direction control valve 62. Furthermore, hydraulic fluid that is discharged from the hydraulic cylinders for steering 22L and 22R returns to a tank 66 via relief valves 63 and 64 that are provided with anti-voiding devices (i.e. anti-void valves).

A hydraulic conduit 67 branches at a branch point 67a, and connects the bottom chamber of the steering hydraulic cylinder 22L to the rod chamber of the steering hydraulic cylinder 22R. And a hydraulic conduit 68 branches at a branch point 68a, and connects the bottom chamber of the steering hydraulic cylinder 22R to the rod chamber of the steering hydraulic cylinder 22L. Accordingly, when pressurized hydraulic fluid is discharged from the steering hydraulic pressure pump 61 via the direction control valve 62 to the hydraulic conduit 71, pressurized hydraulic fluid flows via the hydraulic conduit 67 into the bottom chamber of the steering hydraulic cylinder 22L, and along therewith hydraulic fluid vented from the rod chamber of the steering hydraulic cylinder 22L is discharged from the hydraulic conduit 68 and the relief valve with anti-voiding 63 to the tank 66, so that the steering hydraulic cylinder 22L extends. Moreover, when pressurized hydraulic fluid from the steering hydraulic pressure pump 61 is discharged to the hydraulic conduit 71, pressurized hydraulic fluid flows into the rod chamber of the steering hydraulic cylinder 22R, and along therewith hydraulic fluid vented from the bottom chamber of the steering hydraulic cylinder 22R is discharged from the hydraulic conduit 67 and the relief valve with anti-voiding 64 to the tank 66, so that the steering hydraulic cylinder 22R retracts.

On the other hand, when pressurized hydraulic fluid is discharged from the steering hydraulic pressure pump 61 via the direction control valve 62 to the hydraulic conduit 72, it flows via the hydraulic conduit 68 into the bottom chamber of the steering hydraulic cylinder 22R, and along therewith hydraulic fluid vented from the rod chamber of the steering hydraulic cylinder 22R is discharged from the hydraulic conduit 67 and the relief valve with anti-voiding 64 to the tank 66, so that the steering hydraulic cylinder 22R extends. Moreover, when pressurized hydraulic fluid from the steering hydraulic pressure pump 61 is discharged to the hydraulic conduit 72, pressurized hydraulic fluid flows into the rod chamber of the steering hydraulic cylinder 22L, and along therewith hydraulic fluid vented from the bottom chamber of the steering hydraulic cylinder 22L is discharged from the hydraulic conduit 68 and the relief valve with anti-voiding 64 to the tank 66, so that the steering hydraulic cylinder 22L retracts.

The steering hydraulic cylinders 22L and 22R are attached to the front frame 3 and the rear frame 9 symmetrically about the linking shaft 19 that serves as axis of symmetry. Moreover, if the steering hydraulic cylinders 22L and 22R have the same shape and size, then the amounts and speeds of extension and retraction of the steering hydraulic cylinders 22L and 22R are the same.

As described above, according to a control signal from the control device 50, the control valve drive actuator 57 changes over the direction control valve 62 to a position in which the steering hydraulic pressure pump 61 and the hydraulic conduit 71 are connected, or to a position in which the steering hydraulic pressure pump 61 and the hydraulic conduit 72 are connected. Moreover, the control valve drive actuator 57 adjusts the amounts of pressurized hydraulic fluid that flow into and out of the bottom chambers and the rod chambers of the steering hydraulic cylinders 22L and 22R, in other words the speeds at which the steering hydraulic cylinders 22L and 22R are extended and retracted, according to the speed at which the steering wheel is actuated.

In this case, when the front frame 3 and the rear frame 9 are flexed, it is arranged for the speeds at which the steering hydraulic cylinders 22L and 22R are extended and retracted not to anticipate the speed of flexing of the vehicle body 1 as it flexes due to the difference in rotational speeds between the front wheels 5A and 5B, and the rear wheels 5C and 5D, which are driven by the electric motors M_{A} and M_{D}. In other words the flexing of the front frame 3 and the rear frame 9, or to put it in another manner the alteration of direction, is performed due to the difference in the rotational speeds of the front wheels 5A and 5B, and of the rear wheels 5C and 5D, which are driven by the electric motors M_{A} and M_{D}. Thus, due to the drive force at which the front frame 3 and the rear frame 9 are flexed by the difference in the rotational speeds of the electric motors M_{A} and M_{D}, the rods of the cylinders are put into tension or compression, so that the amounts by which the steering hydraulic cylinders 22L and 22R are extended and retracted attain amounts of extension and retraction that correspond to the angle at which the steering is actuated.

In this manner, it is arranged for the extension and retraction of the steering hydraulic cylinders 22L and 22R to follow the flexing of the front frame 3 and the rear frame 9, so that this extension and retraction is not performed in such a manner as itself to cause the front frame 3 and the rear frame 9 to flex. Accordingly, no large drive force is required from the steering hydraulic cylinders 22L and 22R, so that the hydraulic pressure device for driving them may be relatively small.

Irrespective of any flexing of the vehicle body 1 that is performed by the electric motors M_{A} through M_{D}, the reason for providing the steering hydraulic cylinders 22L and 22R is in order to ensure the reliability when external force operates on the front wheels 5A and 5B and the rear wheels 5C and 5D. In other words, when an external force operates on the front wheels 5A and 5B or the rear wheels 5C and 5D due to road conditions or steering during driving, this external force would not be resisted with only the electric motors M_{A} through M_{D}, and the steering angle of the front wheels 5A and 5B or the rear wheels 5C and 5D would undesirably change, so that slippage upon the road surface or the like would occur. The steering hydraulic cylinders 22L and 22R prevent this sort of slippage and so on.

As described above, the steering hydraulic cylinders 22L and 22R follow the flexing of the front frame 3 and the rear frame 9. This fact means that, when the front frame 3 and the rear frame 9 flex, the rods or the tubes of the steering hydraulic cylinders 22L and 22R are pulled out in the expansion direction. In other words, the inflow of pressurized hydraulic fluid into the steering hydraulic cylinders 22L and 22R lags, so that a negative pressure is created in the rod chamber or in the bottom chamber. For each of the steering hydraulic cylinders 22L and 22R, this occurrence of negative pressure is in the chamber that corresponds to the extension direction.

The relief valves with anti-voiding 63 and 64 are provided in order to cope with this type of situation. These check valves fulfill the function of supplying return hydraulic fluid from the hydraulic conduit 73 that communicates with the tank 66 to any of the bottom chambers or the rod chambers of the steering hydraulic cylinders 22L and 22R on a side on which negative pressure has occurred, thus immediately quenching this negative pressure.

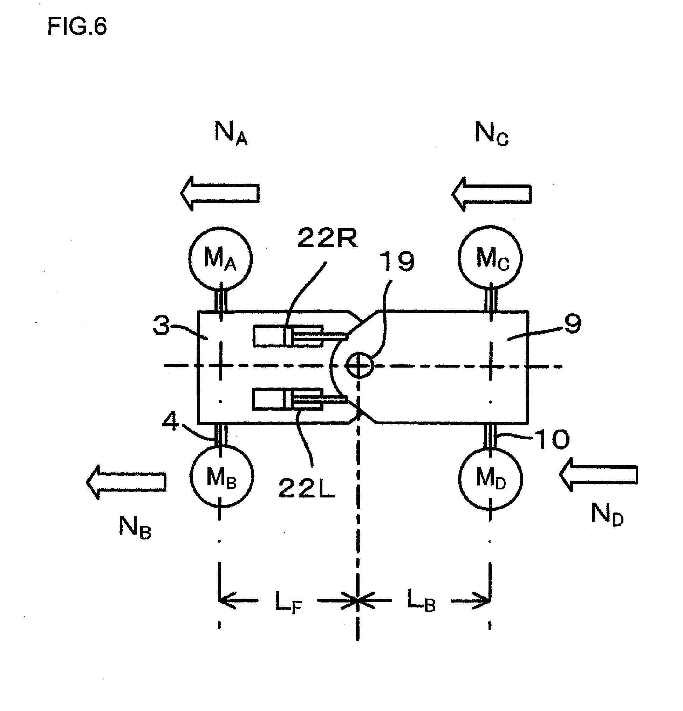

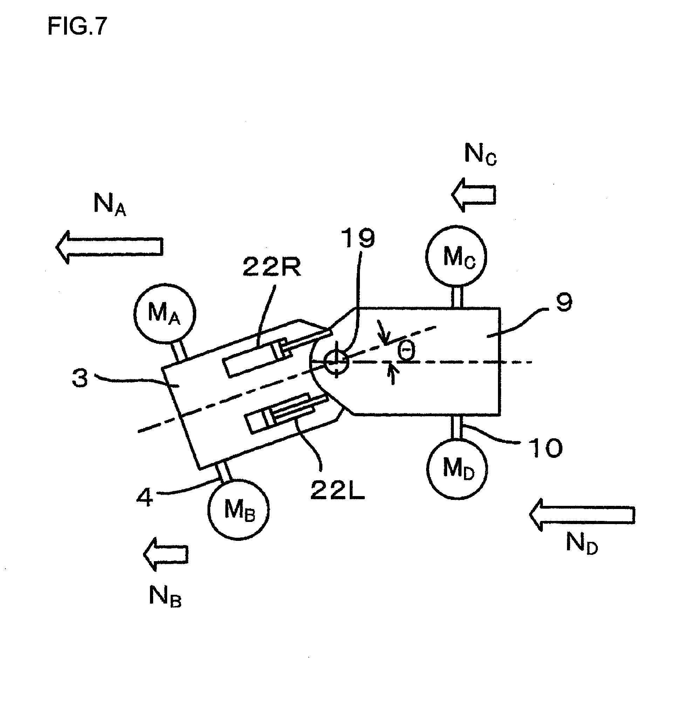

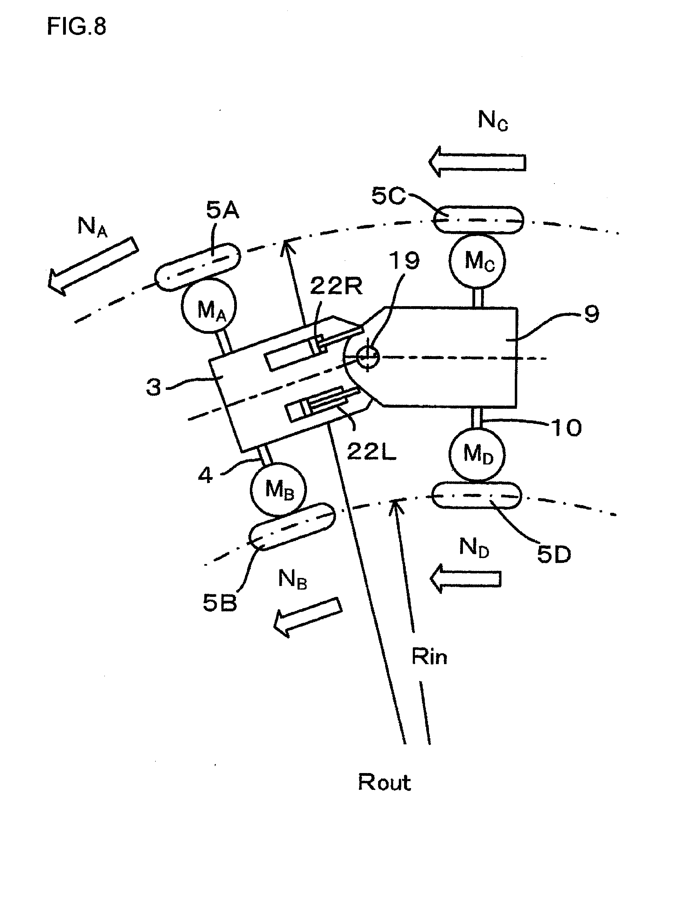

Figs. 6 through 8 are schematic figures showing the relationships of the electric motors and the steering hydraulic cylinders of the wheel loader according to the present invention: Fig. 6 shows a state before alteration of direction; Fig. 7 shows a transitory state during alteration of direction; and Fig. 8 shows a state of turning after alteration of direction.
Fig. 6 is a schematic plan view showing the state before the steering wheel 54 is actuated. In this state, the central axes of the front frame 3 and the rear frame 9 coincide, and are positioned upon the same straight line that passes through the central axis of the linking shaft 19. In this state, the electric motors M_{A} and M_{B} fitted to the front frame 3 and the electric motors M_{C} and M_{D} fitted to the rear frame 9 are rotating the respectively corresponding front wheels 5A and 5B and rear wheels 5C and 5D at the same rotational speed N_{A} through N_{D}. Moreover, the rods of the steering hydraulic cylinders 22L and 22R are pulled out to the same length.

Fig. 7 shows a transitory state when, for example, in the state of Fig. 6 the steering wheel 54 is actuated to rotate in the leftwards direction as seen from the driver's compartment 12. Together with this actuation of the steering wheel 54, ratios of the rotational speeds of the front wheels 5A and 5B, and of the rear wheels 5C and 5D, are calculated by the control device 50 on the basis of the steering angle signal outputted from the steering angle detector 55. Furthermore, the resulting ratios of rotational speed obtained are multiplied by the rotational speed at this time, and thereby rotational speeds are calculated for the front wheels 5A and 5B and for the rear wheels 5C and 5D. And, via the inverters of the electric motors M_{A} through M_{D}, each of the electric motors M_{A} through M_{D} is rotated at the respectively corresponding rotational speed N_{A} through N_{D}.

When the front frame 3 and the rear frame 9 are to be pivoted around the linking shaft 19 so that the direction of the vehicle body 1 is altered, the speeds of the inner and outer front wheels 5A and 5B are made to be different, and the speeds of the inner and outer rear wheels 5C and 5D are made to be different. However, it is arranged for the relationship of the magnitudes of the speeds of the inner and outer front wheels 5A and 5B and the relationship of the magnitudes of the speeds of the inner and outer rear wheels 5C and 5D to be opposite.

For example in Fig. 7, when as seen from the rear frame 9 the front frame 3 is to be rotated in the anti-clockwise direction (i.e. is to be turned leftwards), then, on the front frame 3, the rotational speed N_{A} of the electric motor M_{A} (driving the front wheel 5A) that has become the outer wheel is made to be greater than the rotational speed N_{B} of the electric motor M_{B} (driving the front wheel 5B) that has become the inner wheel.
On the other hand, on the rear frame 9, the rotational speed N_{C} of the electric motor M_{C} (driving the rear wheel 5C) that has become the outer wheel is made to be less than the rotational speed N_{D} of the electric motor M_{D} (driving the rear wheel 5D) that has become the inner wheel.

Due to the fact that the rotational speed N_{A} of the electric motor M_{A} (driving the front wheel 5A) that has become the outer wheel is greater than the rotational speed N_{B} of the electric motor M_{B} (driving the front wheel 5B) that has become the inner wheel, the front frame 3 is rotated in the anti-clockwise direction around the linking shaft 19 as a center. Moreover, due to the fact that the rotational speed N_{C} of the electric motor M_{C} (driving the rear wheel 5C) that has become the outer wheel is less than the rotational speed N_{D} of the electric motor M_{D} (driving the rear wheel 5D) that has become the inner wheel, the rear frame 9 is rotated in the clockwise direction around the linking shaft 19 as a center. As a result, the front frame 3 and the rear frame are flexed by a total flexion angle of θ around the linking shaft 19 as a center. And the central axis of the front frame 3 and the central axis of the rear frame 9 subtend an angle of just θ less than the 180° that they subtended before turning.

If the distance L_{F} between the center of the linking shaft 19 and the central axis of the front wheel axle 4 and the distance L_{R} between the center of the linking shaft 19 and the central axis of the rear wheel axle 10 (refer to Fig. 6) are equal, then the following happens. The rotational speed N_{A} of the electric motor M_{A} and the rotational speed N_{D} of the electric motor M_{D} are made to be equal, and the rotational speed N_{B} of the electric motor M_{B} and the rotational speed N_{C} of the electric motor M_{C} are made to be equal. In other words, the ratio of the rotational speed N_{B} of the electric motor M_{B} with respect to the rotational speed N_{A} of the electric motor M_{A} is equal to the ratio of the rotational speed N_{C} of the electric motor M_{C} with respect to the rotational speed N_{D} of the electric motor M_{D}. On the other hand, if the distance L_{F} between the center of the linking shaft 19 and the central axis of the front wheel axle 4 and the distance L_{R} between the center of the linking shaft 19 and the central axis of the rear wheel axle 10 are not equal, then the following happens. The rotational speed N_{A} of the electric motor M_{A} and the rotational speed N_{D} of the electric motor M_{D}, and the rotational speed N_{B} of the electric motor M_{B} and the rotational speed N_{C} of the electric motor M_{C}, are respectively changed to correspond to the ratio of the lengths of the distance L_{F} and the distance L_{R}. However, in this case as well, the relationship of the magnitudes of the rotational speeds N_{A} and N_{B} of the electric motors M_{A} and M_{B} that drive the front wheels 5A and 5B and the relationship of the magnitudes of the rotational speeds N_{C} and N_{D} of the electric motors M_{C} and M_{D} that drive the rear wheels 5C and 5D are opposite.

By the outer wheel on the front wheel side traveling at a greater speed than the inner wheel and the inner wheel on the rear wheel side traveling at a greater speed than the outer wheel in this manner, the front frame 3 rotates in the relatively anticlockwise direction as seen from the rear frame 9, as shown in Fig. 7. Due to this, the vehicle body 1 is flexed through the flexion angle θ.
Together with this flexing of the vehicle body 1, the steering hydraulic cylinder 22L that is on the inner wheel side is retracted, due to the distance between the front frame 3 and the rear frame 9 on this side to become smaller. Moreover, the steering hydraulic cylinder 22R that is on the outer wheel side is extended, due to the distance between the front frame 3 and the rear frame 9 on this side to become greater.

After the alteration of the direction of the vehicle body 1 shown in Fig. 7 has been completed, then, as shown in Fig. 8, the electric motors M_{A} and M_{C} and the electric motors M_{B} and M_{D} are rotated at corresponding rotational speeds with an inner-outer rotational speed difference being applied, so that turning is performed upon an outer track having an outer radius Rout and on an inner track having an inner radius Rin.
If the distance L_{F} between the center of the linking shaft 19 and the central axis of the front wheel axle 4 and the distance L_{R} between the center of the linking shaft 19 and the central axis of the rear wheel axle 10 are equal, then the rotational speed N_{A} of the front wheel 5A and the rotational speed N_{C} of the rear wheel 5C are now the same, so that the rear wheel 5C travels along the same radius Rout as the front wheel 5A during turning. And the rotational speed N_{B} of the front wheel 5B and the rotational speed N_{D} of the rear wheel 5D are now the same, so that the rear wheel 5D travels along the same radius Rin as the front wheel 5B during turning. And, as described above, if the distance L_{F} between the center of the linking shaft 19 and the central axis of the front wheel axle 4 and the distance L_{R} between the center of the linking shaft 19 and the central axis of the rear wheel axle 10 are different, then, corresponding to the ratio of the lengths of the distance L_{F} and the distance L_{R}, the rotation radiuses of the front wheels 5A and 5B and the rotation radiuses of the rear wheels 5C and 5D will be different. As a result, the rear wheels 5C and 5D travel outside or inside the rotation radius of the front wheels 5A and 5B during turning.
Next, the operation of this wheel loader 100 according to the present invention will be explained.

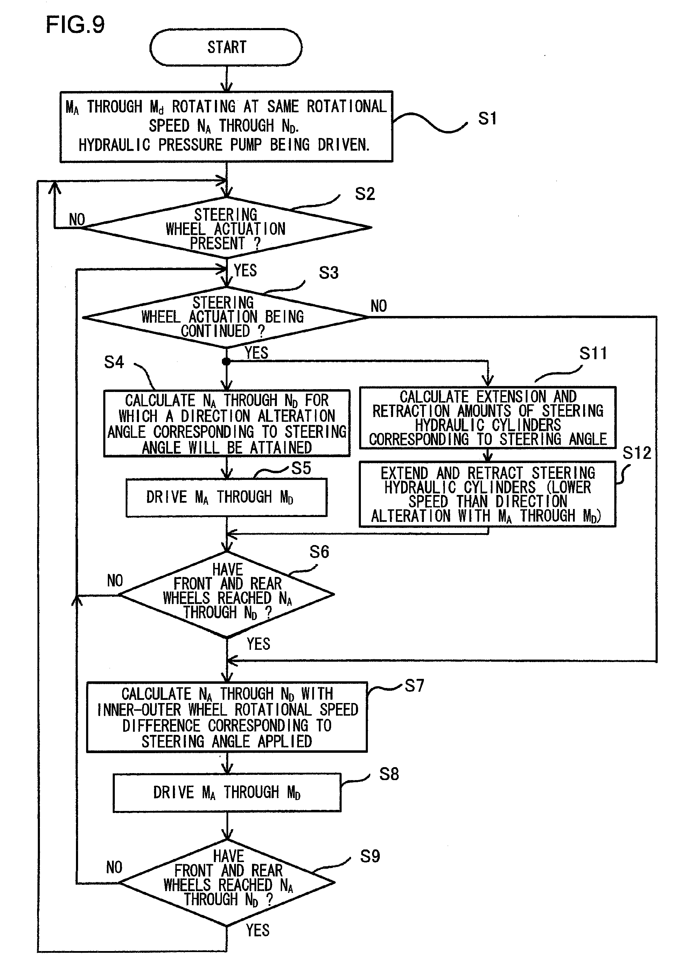

Fig. 9 shows an embodiment of a processing flow related to turning of the wheel loader 100 according to the present invention. This processing flow is performed by a control program being executed by the CPU within the control device 50.
As shown in a step S1, this processing flow for turning operation is started in the state in which the wheel loader 100 is traveling with the rotational speeds N_{A} through N_{D} of the electric motors M_{A} through M_{D} being the same, and with the steering hydraulic pressure pump 61 being driven by rotation of the drive shaft of the engine 8A. This explanation will consider the flexion angle θ of the vehicle body 1 in this case as being zero.

In a step S2, a decision is made as to whether or not steering actuation of the steering wheel 54 has been performed. This decision is performed by the control device 50 on the basis of whether or not a steering angle signal has been sent from the steering angle detector 55. If the steering wheel 54 has been actuated and a steering signal is detected, then in a step S3 a decision is made as to whether or not steering actuation of the steering wheel 54 is currently being continued.

This step S3 is processing for deciding whether or not information relating to steering angle has been continuously inputted from the steering angle detector 55 over a predetermined time interval. If it is decided in this step S3 that information relating to steering angle has been inputted from the steering angle detector 55 over the predetermined time interval, then this is considered as implying that actuation of the steering wheel 54 is continuing, and the flow of control proceeds to a step S4. But if, in the step S3, information relating to steering angle is not inputted from the steering angle detector 55 over the predetermined time interval, then this is considered as implying that actuation of the steering wheel 54 has ended or been terminated, and the flow of control proceeds to a step S7.

If information relating to steering angle is sent from the steering angle detector 55 over the predetermined time interval, then in the step S4 rotational speeds N_{A} through N_{D} for the electric motors M_{A} through M_{D} for which the front frame 3 and the rear frame 9 will reach a flexion angle (i.e. a direction alteration angle) of θ that corresponds to the steering angle of the steering wheel 54 are calculated by the control device 50. As described above, in this calculation of the rotational speeds N_{A} through N_{D} for the electric motors M_{A} through M_{D}, the ratios of rotational speed for the electric motors M_{A} through M_{D} for which a flexion angle θ corresponding to the steering angle will be attained are calculated, and these ratios of rotational speed are multiplied by the rotational speed at this time. And in a step S5 control signals are sent to the inverters, and the electric motors M_{A} through M_{D} are caused to rotate at the respective rotational speeds N_{A} through N_{D} that have thus been calculated.

Furthermore, if it is decided in the step S3 that information relating to steering angle is inputted from the steering angle detector 55 over the predetermined time interval, then extension and retraction amounts for the steering hydraulic cylinders 22L and 22R that correspond to the steering angle of the steering wheel 54 are calculated in a step S11, in parallel with the step S4. And in a step S12 a control signal corresponding to the result of this calculation is outputted to the control valve drive actuator 57, so that, along with the direction control valve 62 being changed over to a position that corresponds to the direction of rotation of the steering wheel 54, also the flow rate of pressurized hydraulic fluid that is flowed out from the direction control valve 62 to the hydraulic conduit 71 or 72 is adjusted.

As described above, the speed of extension and retraction of the steering hydraulic cylinders 22L and 22R does not take precedence over the speed of flexion of the vehicle body 1 as it is flexed due to the differences in rotational speed of the front wheels 5A and 5B and the rear wheels 5C and 5D as they are driven by the electric motors M_{A} through M_{D}. To put it in another manner, in the flexing of the vehicle body 1, the operation that is performed due to the differences in rotational speed of the front wheels 5A and 5B and the rear wheels 5C and 5D as they are driven by the electric motors M_{A} through M_{D} takes precedence. In other words, the extension and retraction of the steering hydraulic cylinders 22L and 22R is performed at a speed that follows the flexing of the front frame 3 and the rear frame 9. The calculation by the control device 50 in the step S11 is performed in conformity with this type of condition.

It should be understood that while, in Fig. 9, it is shown that the step S4 and the step S11 are performed in parallel, this is for the convenience of explanation, and actually the step S4 and the step S11 are processed serially. In this case, there is no particular reason why either of these steps should be performed before the other.

After the processing of the steps S5 and S12, in the next step S6, a decision is made as to whether or not the front wheels 5A and 5B and the rear wheels 5C and 5D have reached the respective rotational speeds N_{A} through N_{D} that were calculated by the above calculation. In other words, the actual rotational speeds of the front wheels 5A and 5B and the rear wheels 5C and 5D that are sent from the rotational speed detectors 56A through 56D and the rotational speeds N_{A} through N_{D} that were calculated by the above calculation are correlated by the control device 50. If the actual rotational speeds of the front wheels 5A and 5B and the rear wheels 5C and 5D have not reached the rotational speeds N_{A} through N_{D} that were calculated by the above calculation, then the flow of control returns to the step S3 and driving of the electric motors M_{A} through M_{D} is continued. But if it is decided that each of the front wheels 5A and 5B and the rear wheels 5C and 5D has reached its respective rotational speed N_{A} through N_{D} that was calculated by the calculation described above, then the processing of a step S7 is performed.

This step S7 is performed in a state in which, as shown in Fig. 7, the flexion angle θ of the front frame 3 and the rear frame 9 has reached a flexion angle θ that corresponds to the steering actuation angle of the steering wheel 54, and transition is to take place to turning upon a track having a radius that corresponds to this flexion angle θ, as shown in Fig. 8. Accordingly, in the step S7, ratios of rotational speeds N_{A} through N_{D} of the electric motors M_{A} through M_{D} with inner-outer wheel rotational speed differences that correspond to the steering angle of the steering wheel 54 are calculated by the control device 50, and rotational speeds N_{A} through N_{D} for the electric motors M_{A} through M_{D} are calculated by multiplying these calculation results by the rotational speed at this time. And in a step S8 the electric motors M_{A} through M_{D} are caused to rotate at the rotational speeds N_{A} through N_{D} that have thus been calculated.

Subsequently in a step S9 a decision is made as to whether or not the front wheels 5A and 5B and the rear wheels 5C and 5D have reached the respective rotational speeds N_{A} through N_{D}. In this case as well, in a similar manner to the processing performed in the step S6, the actual rotational speeds of the front wheels 5A and 5B and the rear wheels 5C and 5D that are sent from the rotational speed detectors 56A through 56D and the rotational speeds N_{A} through N_{D} that were calculated by the above calculation are correlated by the control device 50. If the front wheels 5A and 5B and the rear wheels 5C and 5D have not reached the respective rotational speeds N_{A} through N_{D}, then the flow of control returns to the step S3 and driving of the electric motors M_{A} through M_{D} is continued. But if it is decided that each of the front wheels 5A and 5B and the rear wheels 5C and 5D has reached its respective rotational speed N_{A} through N_{D}, then the flow of control returns to the step S2.

In this step S9, the state in which it has been decided that each of the front wheels 5A and 5B and the rear wheels 5C and 5D has reached the respective rotational speed N_{A} through N_{D} is a state in which, as shown in Fig. 8, the wheel loader 100 is turning upon a track having a radius that corresponds to the amount of actuation of the steering wheel 54. And, by the steps S2 through S9 being repeated, it is possible for the wheel loader 100 to travel while its direction is changed as desired.

According to the hybrid wheel loader shown as being an embodiment of the present invention, the beneficial effects described below may be obtained.
(1) Alteration of the direction of the vehicle body 1 is performed by controlling the rotational speeds N_{A} through N_{D} of the electric motors M_{A} through M_{D} for traveling that are installed corresponding to each of the front wheels 5A and 5B and the rear wheels 5C and 5D. Due to this, there is no requirement for any large hydraulic pressure system such as would be needed if alteration of the direction of the vehicle body were to be performed with hydraulic cylinders, and accordingly it is possible to make the size of the wheel loader more compact. Moreover, the amount of electrical power consumed becomes lower, and this is a further desirable factor from the point of view of the environment.
(2) As described in (1) above, alteration of the direction of the vehicle body 1 is performed at extremely high speed, since it is performed by controlling the rotational speeds N_{A} through N_{D} of the electric motors M_{A} through M_{D} for traveling. With alteration of direction only according to hydraulic pressure operation as in the prior art, in some cases, due to accumulation of the response delays of the spools of the hydraulic pressure operating valves, positional deviation (knob deviation) may occur in the position of a knob that is provided upon the steering wheel for estimating its rotational angle, and this may constitute an obstacle to operation of the steering wheel; but, with this embodiment of the present invention, it becomes possible to prevent this type of knob deviation.
(3) In addition, it becomes possible to adjust the speed of the orientation changing operation when performing alteration of the direction of the vehicle body by providing programming that establishes correspondence with the vehicle running speed. Due to this, it is possible to perform control while keeping down the speed command value so as to alter the direction gently even during high speed traveling, and it becomes simple and easy to do this while preventing horizontal swaying of the wheel loader.

(4) Apart from the operation for alteration of direction by control of the rotational speeds of the electric motors M_{A} through M_{D}, the steering hydraulic cylinders 22L and 22R are provided between the front frame 3 and the rear frame 9 for supporting this alteration of direction. Due to this, even if during traveling some external force acts upon the front wheels 5A and 5B or on the rear wheels 5C and 5D, it is still possible to prevent or mitigate slippage or the like of the vehicle body by the action of these steering hydraulic cylinders 22L and 22R.
(5) As described in (4) above, with this embodiment of the wheel loader of the present invention, the steering hydraulic cylinders 22L and 22R are provided for alteration of direction. Due to this, alteration of the direction of the vehicle body 1 can still be accomplished successfully even if by a very unlikely chance an anomaly should occur in the control of the electric motors M_{A} through M_{D} for traveling. Accordingly, it is possible to obtain high levels of reliability and security that could not be obtained with the prior art technique.

(6) The relief valves with anti-voiding 63 and 64 are interposed between the hydraulic conduits 71 and 72 that supply pressurized hydraulic fluid from the steering hydraulic pressure pump 61 to the bottom chambers and the rod chambers of the steering hydraulic cylinders 22L and 22R and exhaust fluid therefrom, and the tank 66. Due to this, even with this construction in which the extension and retraction of the steering hydraulic cylinders 22L and 22R follows the flexing of the front frame 3 and the rear frame 9, if one of the steering hydraulic cylinders 22L and 22 goes to negative pressure, then it becomes possible for hydraulic fluid to return immediately into the cylinder, so as to quench this negative pressure.

The hybrid wheel loader shown above as being an embodiment of the wheel loader according to the present invention may also be varied as follows.
(1) In the embodiment described above, in order to ensure the reliability, it was supposed that the wheel loader was provided with the steering hydraulic cylinders 22L and 22R. However, there is no need necessarily to provide the steering hydraulic cylinders 22L and 22R.
(2) While it was supposed that the working device was a bucket, it would also be possible to provide a working device of some other type, such as a snow clearing device or the like.
(3) While a hybrid type wheel loader has been explained, the present invention could also be applied to any electrically driven type.
(4) While each of the front wheels and the rear wheels was provided as a left and right pair, it would also be possible for either of both of these to be a plurality of pairs; the present invention can be applied to any wheel loader in which the vehicle body is flexed.
(5) Instead of the method of performing control of the flexion angle θ during alteration of the direction of the vehicle body 1 on the basis of the rotational speeds of the front wheels 5A and 5B and of the rear wheels 5C and 5D, it would also be acceptable to arrange to install a detector that detects the flexion angle θ of the front frame 3 and the rear frame 9, and to perform control on the basis of the detection signal for the flexion angle θ.

Apart from the above, it would also be possible to make various alterations to the structure of the wheel loader of the present invention within the scope of the gist of the present invention; the essential point is that it should include: a vehicle body in which a front frame and a rear frame are connected together at a connection section in a steerable manner; at least a pair of front wheels fitted to wheel axle of the front frame and at least a pair of rear wheels fitted to wheel axle of the rear frame, with the connection section between the pair of front wheels and the pair of rear wheels; a pair of front wheel electric motors that drive the pair of front wheels and a pair of rear wheel electric motors that drive the pair of rear wheels; a direction alteration control unit that flexes the vehicle body so that the front frame and the rear frame rotate in mutually opposite directions about the connection section as a center while steering actuation is being performed, by driving the pair of front wheel electric motors and the pair of rear wheel electric motors so that a magnitude relationship between speeds of the front wheel electric motor on the inner wheel side and of the rear wheel electric motor on the inner wheel side and a magnitude relationship between speeds of the front wheel electric motor on the outer wheel side and of the rear wheel electric motor on the outer wheel side are opposite, and moreover a speed difference corresponds to a steering angle; and a turning control unit that, when the steering actuation is determined to have been terminated, drives the pair of front wheel electric motors and the pair of rear wheel electric motors so that an inner-outer wheels speed difference corresponding to the steering angle is applied to the speed difference of the front wheel electric motor on the outer wheel side and the front wheel electric motor on the inner wheel side, and so that the inner-outer wheels speed difference corresponding to the steering angle is applied to the speed difference of the rear wheel electric motor on the outer wheel side and the rear wheel electric motor on the inner wheel side.

While various embodiments and variant embodiments have been explained in the above description, the present invention is not to be considered as being limited by the details thereof. Other embodiments that are considered to fall within the range of the technical concept of the present invention are also to be included within the scope of the present invention.

The content of the disclosure of the following application, upon which priority is claimed, is hereby incorporated herein by reference:
Japanese Patent Application 121,390 of 2010 (filed on 27 May 2010).

## Claims

1. A wheel loader, comprising:
a vehicle body in which a front frame and a rear frame are connected together at a connection section in a steerable manner;
at least a pair of front wheels fitted to wheel axle of the front frame and at least a pair of rear wheels fitted to wheel axle of the rear frame, with the connection section between the pair of front wheels and the pair of rear wheels;
a pair of front wheel electric motors that drive the pair of front wheels and a pair of rear wheel electric motors that drive the pair of rear wheels;
a direction alteration control unit that flexes the vehicle body so that the front frame and the rear frame rotate in mutually opposite directions about the connection section as a center while steering actuation is being performed, by driving the pair of front wheel electric motors and the pair of rear wheel electric motors so that a magnitude relationship between speeds of the front wheel electric motor on an inner wheel side and of the rear wheel electric motor on the inner wheel side and a magnitude relationship between speeds of the front wheel electric motor on an outer wheel side and of the rear wheel electric motor on the outer wheel side are opposite, and moreover a speed difference corresponds to a steering angle; and
a turning control unit that, when the steering actuation is determined to have been terminated, drives the pair of front wheel electric motors and the pair of rear wheel electric motors so that an inner-outer wheels speed difference corresponding to the steering angle is applied to the speed difference of the front wheel electric motor on the outer wheel side and the front wheel electric motor on the inner wheel side, and so that the inner-outer wheels speed difference corresponding to the steering angle is applied to the speed difference of the rear wheel electric motor on the outer wheel side and the rear wheel electric motor on the inner wheel side.

2. A wheel loader according to Claim 1, further comprising:
a pair of steering hydraulic cylinders each of which links together the front frame and the rear frame, with the vehicle body being flexed by extension and retraction operation of the pair of steering hydraulic cylinders in accordance with the steering actuation.

3. A wheel loader according to Claim 2, wherein:
the pair of steering hydraulic cylinders operate to extend and retract so as to follow an orientation changing operation in which the vehicle body is flexed in accordance with the speed difference of the electric motors that are driven by the direction alteration unit.

4. A wheel loader according to Claim 3, further comprising:
anti-void valves connected to the bottom chambers and to the rod chambers of the pair of steering hydraulic cylinders.

5. A wheel loader according to any one of Claims 1 through 4, wherein:
the connection section is positioned at an intermediate position at which distances from the connection section to front wheel axle to which the pair of front wheels are attached and from the connection section to rear wheel axle to which the pair of rear wheels are attached are equal.

6. A wheel loader according to Claim 5, wherein:
the direction alteration control unit drives the front wheel electric motor that drives the front wheel on the inner wheel side and the rear wheel electric motor that drives the rear wheel on the outer wheel side at a same rotational speed, and drives the front wheel electric motor that drives the front wheel on the outer wheel side and the rear wheel electric motor that drives the rear wheel on the inner wheel side at a same rotational speed.

7. A wheel loader according to Claim 5 or Claim 6, wherein:
the turning control unit drives the front wheel electric motor that drives the front wheel on the inner wheel side and the rear wheel electric motor that drives the rear wheel on the inner wheel side at a same rotational speed, and drives the front wheel electric motor that drives the front wheel on the outer wheel side and the rear wheel electric motor that drives the rear wheel on the outer wheel side at a same rotational speed.
